# FASCICULE DE BREVET EUROPEEN

(11) **EP 3 530 539 B1**
(45) Date de publication et mention de la délivrance du brevet: **12.07.2023**
(21) Numéro de dépôt: 19156811.2
(22) Date de dépôt: 13.02.2019
(51) Int. Cl.: B61B 12/02, F16C 27/06, F16F 1/38

(54) **INSTALLATION DE TRANSPORT DE VÉHICULE COMPRENANT UN DISPOSITIF D'APPUI ET DE GUIDAGE D'UN CÂBLE TRACTEUR AÉRIEN ET PROCÉDÉ DE FABRICATION DU DISPOSITIF**
TRANSPORTANLAGE FÜR FAHZEUGE MIT EINER STÜTZ- UND FÜHRUNGSVORRICHTUNG EINES LUFTSEILS UND HERSTELLUNGSVERFAHREN DIESER VORRICHTUNG
TRANSPORT FACILITY FOR VEHICLES COMPRISING A DEVICE FOR SUPPORTING AND GUIDING AN AERIAL CABLE AND METHOD FOR MANUFACTURING THE DEVICE

(30) Priorité: 26.02.2018 FR 1851651
(43) Date de publication de la demande: 28.08.2019
(73) Titulaire: POMA, 38340 Voreppe (FR)
(72) Inventeur: MUGNIER, Jean-François, 73120 Courchevel Village (FR)
(74) Mandataire: Talbot, Alexandre

(56) Documents cités:
- EP-A1- 0 230 814
- EP-A1- 0 396 161
- EP-A1- 0 529 629
- BE-A- 479 697
- FR-A1- 2 744 974
- FR-A1- 2 867 142
- US-A- 4 995 319

## Description

### Domaine technique de l'invention

L'invention concerne l'appui et le guidage d'un câble tracteur aérien pour tracter des véhicules d'une installation de transport.

### État de la technique

Actuellement, les installations de transport par câble tracteur de véhicule sont équipées de dispositifs d'appui et de guidage tels que des balanciers pour maintenir et guider les câbles tracteurs en mouvement entre les gares d'embarquement et de débarquement des passagers. Généralement, les balanciers sont portés par des pylônes et sont équipés de galets rotatifs sur lesquels le câble tracteur est en appui. Les galets sont montés à rotation libre sur des poutres articulées pour maintenir le câble tracteur en appui sur le pylône lors des variations de flèche du câble dues au poids du véhicule et au passage de sa pince sur les galets.

On peut citer la demande de brevet français FR2920385 déposée au nom de la demanderesse qui divulgue un dispositif mécanique de réglage d'un balancier d'appui et de guidage d'un câble aérien d'une installation de remontée mécanique. Le balancier comporte des galets de guidage du câble montés à rotation sur un châssis-porteur selon des axes de rotation parallèles échelonnés le long du châssis-porteur.

En particulier, on utilise un axe, qui est une pièce allongée, pour articuler en rotation ou en pivotement un élément mobile par rapport à un support sur lequel l'axe est monté fixe. L'élément mobile est pourvu d'un orifice traversant dans lequel l'axe est introduit. On place en outre un ou plusieurs paliers entre l'axe et l'élément mobile pour permettre le pivotement ou la rotation de l'élément mobile par rapport au support. De manière générale, on utilise des paliers à roulement, tels des roulements à rouleaux ou à bille, pour une articulation à rotation ; et on utilise des paliers lisses, par exemple une pièce cylindrique creuse élastique, pour une articulation à pivotement. Mais les paliers à roulement nécessitent un graissage et il est difficile d'effectuer un tel graissage sur des balanciers qui sont situés à des hauteurs élevées ou qui sont difficiles d'accès. En outre, les paliers lisses peuvent s'user s'ils ont été mal placés au sein de l'orifice traversant, ou si les conditions environnementales sont extrêmes, ou encore selon l'utilisation de l'installation de transport.

Pour réaliser des articulations à pivotement plus robustes et qui s'usent moins facilement, on peut utiliser un axe en acier et un caoutchouc monté par adhérence autour de l'axe. Le caoutchouc adhère mécaniquement à l'axe de sorte qu'il ne peut pas être retiré de l'axe sans détruire le caoutchouc ou l'axe. On introduit ensuite l'articulation dans un orifice formé au sein d'un support. Mais l'introduction est délicate car l'orifice du support est préalablement défini et il est difficile d'usiner à nouveau l'orifice pour faciliter l'introduction de l'articulation. Par ailleurs, l'introduction de l'articulation est liée à un savoir-faire de l'utilisateur qui place l'articulation par poussées successives. En effet, l'introduction de l'articulation se fait selon une première direction et à chaque poussée, l'articulation a tendance à ressortir de l'orifice selon une deuxième direction opposée à la première, du fait des contraintes de déformations élastiques exercées sur le caoutchouc à chaque poussée.

On peut également citer le brevet américain US 4 995 319, qui divulgue un assemblage de galets pour supporter un câble tracteur pour télésiège. L'assemblage comporte une douille élastomère ayant un manchon annulaire métallique rigide externe, un manchon interne monté fixe sur un support et un élément de connexion annulaire intermédiaire en matériau élastomère pour permettre au manchon externe de pivoter par rapport au manchon interne.

### Objet de l'invention

Un objet de l'invention consiste à pallier ces inconvénients, et plus particulièrement à fournir des moyens pour articuler un élément mobile par rapport à un support qui nécessitent peu de maintenance, qui soient robustes et qui soient facile à placer sur le support.

Selon un aspect de l'invention, il est proposé une installation de transport de véhicule, comprenant un câble tracteur aérien pour tracter les véhicules et un dispositif d'appui et de guidage du câble tracteur aérien. Le dispositif comprend une structure porteuse dans laquelle un orifice est formé, au moins un support portant un galet rotatif destiné à être en contact avec le câble tracteur aérien, le galet étant monté libre à rotation par l'intermédiaire d'une articulation à rotation et une articulation à pivotement reliant ledit au moins un support à la structure porteuse, l'articulation à pivotement comprenant une première armature configurée pour être fixée à un support portant un galet rotatif destiné à être en contact avec le câble tracteur.

L'articulation à pivotement comporte une deuxième armature configurée pour être introduite dans un orifice formé au sein d'une structure porteuse du dispositif, et au moins un élément élastique placé entre les première et deuxième armatures et configuré pour permettre un pivotement de la première armature par rapport à la structure porteuse. L'articulation à pivotement a un diamètre externe variable apte à diminuer lorsque l'articulation à pivotement est introduite dans l'orifice.

Ainsi, on fournit une articulation qui ne nécessite pas de graissage. En outre, l'articulation peut être introduite plus facilement grâce à son diamètre externe qui peut varier. Une telle articulation est particulièrement adaptée pour être introduite au sein d'un orifice sans avoir à modifier le diamètre de l'orifice.

Le diamètre externe de l'articulation peut être supérieur ou égal à un diamètre interne de l'orifice avant une introduction de l'articulation dans l'orifice.

La deuxième armature peut comprendre au moins deux parties séparées l'une de l'autre par un espace.

Ledit au moins un élément élastique peut pénétrer au sein de l'espace séparant lesdites au moins deux parties de la deuxième armature.

La première armature peut comporter au moins deux parties séparées l'une de l'autre par un espace additionnel.

Ledit au moins un élément élastique peut en outre pénétrer au sein de l'espace additionnel séparant lesdites au moins deux parties de la première armature.

Lesdites au moins deux parties de la deuxième armature peuvent former deux extrémités d'une même pièce présentant une fente s'étendant le long d'un axe longitudinal de la pièce et correspondant à l'espace séparant lesdites au moins deux parties de la deuxième armature.

Lesdites au moins deux parties de la première armature peuvent former deux extrémités d'une même pièce interne présentant une fente s'étendant le long d'un axe longitudinal de la pièce interne et correspondant à l'espace additionnel séparant lesdites au moins deux parties de la première armature.

Ledit au moins un élément élastique peut comporter un matériau en caoutchouc.

L'articulation peut comprendre un élément intercalaire situé entre les première et deuxième armatures, et deux éléments élastiques placés de part et d'autre de l'élément intercalaire.

Selon encore un autre aspect, il est proposé un procédé de fabrication d'un dispositif d'appui et de guidage d'un câble tracteur aérien de véhicule d'une installation de transport.

Le procédé comprend un placement d'au moins un élément élastique entre une première et une deuxième armatures pour former une articulation ayant un diamètre externe variable, le procédé comprenant une introduction de l'articulation à pivotement dans un orifice formé au sein d'une structure porteuse du dispositif en faisant diminuer le diamètre externe de l'articulation, et une fixation de la première armature à un support portant un galet rotatif destiné à être en contact avec le câble tracteur, la première armature étant apte à pivoter par rapport à la structure porteuse.

### Description sommaire des dessins

D'autres avantages et caractéristiques ressortiront plus clairement de la description qui va suivre de modes particuliers de réalisation et de mise en oeuvre de l'invention donnés à titre d'exemples non limitatifs et représentés aux dessins annexés, dans lesquels :
- la figure 1, illustre schématiquement une vue latérale en perspective d'un mode de réalisation d'un dispositif d'appui et de guidage selon l'invention ;
- la figure 2, illustre de façon schématique une vue en coupe d'un mode de réalisation d'une articulation selon l'invention ;
- la figure 3, illustre de façon schématique une vue en coupe d'un autre mode de réalisation de l'articulation, lorsque l'articulation est située à l'extérieure de la structure porteuse ;
- la figure 4, illustre de façon schématique une vue en coupe de l'articulation de la figure 3, lorsque l'articulation est introduite à l'intérieur de la structure porteuse ; et
- la figure 5, illustre de façon schématique une vue en coupe d'un autre mode de réalisation d'un dispositif d'appui et de guidage.

### Description détaillée

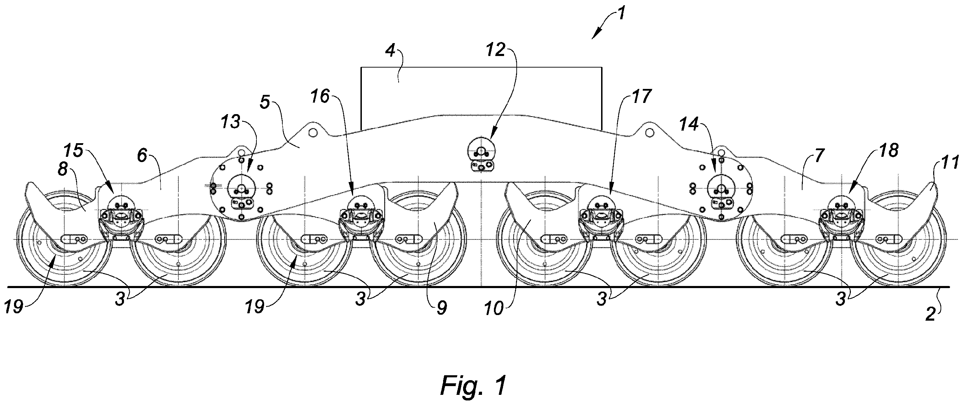

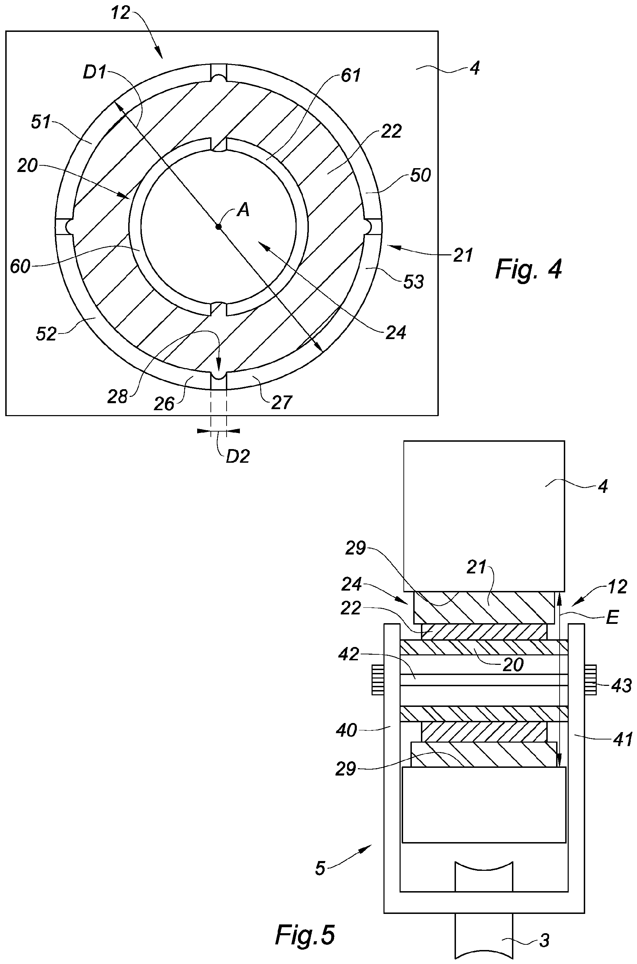

Sur les figures 1 et 5, on a représenté un dispositif d'appui et de guidage 1 d'un câble tracteur 2 de véhicule. Le dispositif d'appui et de guidage 1, noté également balancier, offre un appui et un guidage pour le câble tracteur 2 en mouvement d'une installation de transport de véhicule. L'installation de transport de véhicule par le câble tracteur 2 est du type téléphérique, tel qu'un télésiège ou une télécabine, et le câble tracteur 2 est aérien. Les véhicules de transport des personnes sont accrochés au câble tracteur 2 pour être tractés d'une gare à l'autre de l'installation. En particulier, le balancier 1 est une structure mobile supportant des galets rotatifs 3 destinés à être en contact avec le câble tracteur 2. Les balanciers 1 sont généralement montés mobiles au sommet d'un pylône, non représenté ici à des fins de simplification.

Un balancier 1 comporte une poutre principale 4, au moins un élément mobile 5 à 11 monté à pivotement par rapport à la structure porteuse 4, par l'intermédiaire d'au moins une articulation 12 à 18. Les éléments mobiles 5 à 11 sont également appelés poutres secondaires. La poutre principale 4 est montée fixe sur le pylône. Un élément mobile 5 à 11 permet d'articuler les galets 3 par rapport à la poutre principale 4 afin de suivre les mouvements du câble tracteur 2. Par exemple, sur la figure 1 on a représenté un balancier 1 muni de huit galets rotatifs 3. Le balancier 1 comporte un élément mobile principal 5 monté mobile sur la poutre principale 4, par l'intermédiaire d'une première articulation 12. Deux éléments mobiles secondaires 6, 7 sont montés mobiles sur l'élément mobile principal 5, par l'intermédiaire, respectivement, d'une deuxième et d'une troisième articulations 13, 14. Deux éléments mobiles tertiaires 8, 9 sont montés mobiles sur un premier élément mobile secondaire 6, par l'intermédiaire de deux articulations, respectivement notées quatrième et cinquième 15, 16. Deux autres éléments mobile tertiaires 10, 11 sont montés mobiles sur un deuxième élément mobile secondaire 7, par l'intermédiaire de deux articulations, respectivement notées sixième et septième 17, 18. Chaque galet 3 est monté à rotation sur un élément mobile tertiaire 8 à 11 par l'intermédiaire d'une articulation à rotation 19. Les articulations à rotation 19 permettent une rotation libre des galets 3. Les sept autres articulations 12 à 18, sont des articulations à pivotement.

De manière générale, un premier élément mobile 5 à 11 est monté articulé sur un deuxième élément mobile 5 à 7, ou fixe 4, par l'intermédiaire d'une articulation 12 à 18. Le premier élément mobile 5 à 11 est également noté support portant un galet rotatif 3, et le deuxième élément mobile 5 à 7 ou fixe 4, est également appelé structure porteuse. En d'autres termes, les éléments mobiles principal et secondaire 5 à 7 sont à la fois un support de galets 3 et une structure porteuse. Les articulations 12 à 18 permettent donc une articulation d'un support 5 à 11 par rapport à une structure porteuse 4 à 7.

Plus particulièrement, les galets 3 sont montés à rotation et les éléments mobiles 5 à 11 sont montés à pivotement. On entend par « monté à rotation », un élément pouvant effectuer une ou plusieurs rotations complètes autour d'un axe de rotation. On entend par « monté à pivotement », un élément pouvant effectuer une partie de rotation inférieure à 360°, plus particulièrement inférieure à 20°, dans un sens de rotation ou dans l'autre. De préférence, la première articulation 12 permet un pivotement de 5° maximum dans un sens de rotation ou dans l'autre. Par exemple, les deuxième et troisième articulations 13, 14 permettent un pivotement de 10° maximum dans un sens de rotation ou dans l'autre. Selon un autre exemple, les quatre autres articulations 15 à 18 permettent un pivotement de 15° maximum dans un sens de rotation ou dans l'autre. Le mouvement de pivotement autorisé par chaque articulation 12 à 18 est fonction de sa position au sein du balancier 1 et de la charge exercée par le câble tracteur 2.

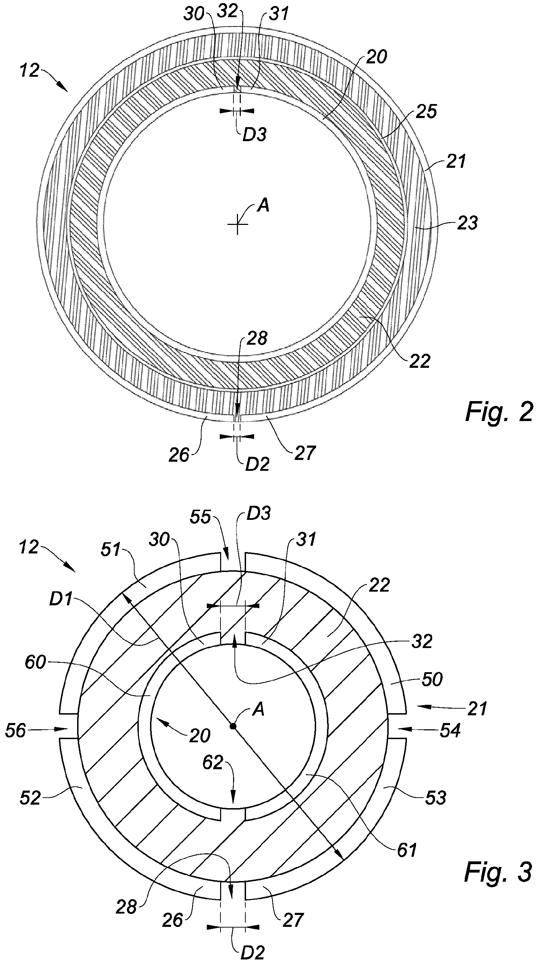

Sur les figures 2 à 5 on a représenté des modes de réalisation d'une articulation 15 à 18. De manière générale, l'articulation 15 à 18 comporte une première armature 20, une deuxième armature 21 et au moins un élément élastique 22, 23 placé entre les première et deuxième armatures 20, 21. La première armature 20 est configurée pour être fixée à un support 5 à 11 portant un galet rotatif 3. La deuxième armature 21 est configurée pour être introduite dans un orifice 24 formé au sein d'une structure porteuse 4 à 7 du balancier 1. En outre, l'articulation 12 à 18 a un diamètre externe D1 variable apte à diminuer pour introduire l'articulation 12 à 18 dans l'orifice 24. Lorsque l'articulation 12 à 18 est placée au sein de la structure porteuse 4 à 7, l'élément élastique 22, 23 permet un pivotement de la première armature 20, et donc du support 5 à 11, par rapport à la structure porteuse 4 à 7 dans laquelle l'articulation 12 à 18 est introduite.

Les première et deuxième armatures 20, 21 sont généralement cylindriques. On entend par cylindre, un solide limité par une surface cylindrique engendrée par un ensemble de droites parallèles, notées génératrices, s'appuyant sur une courbe plane fermée, notée directrice, et deux plans coupant les génératrices. La première armature 20 peut avoir un corps creux ou plein. En particulier, la deuxième armature 21 a un corps creux de manière à introduire la première armature 20 au sein de la deuxième armature 21. En d'autres termes, la deuxième armature entoure au moins en partie la première armature 20. Les armatures 20, 21 sont de préférence métalliques, par exemple en acier. Les armatures 20, 21 sont de préférences coaxiales par rapport à un axe longitudinal A s'étendant le long des armatures 20, 21.

L'articulation peut comprendre un ou plusieurs éléments élastiques 22, 23. Comme illustré sur les figures 3 à 5, l'articulation comporte un élément élastique 22. Sur la figure 2, l'articulation 12 comporte deux éléments élastiques 22, 23. Un élément élastique 22, 23 est, par exemple, réalisé à partir d'un matériau en élastomère, de préférence en caoutchouc. Plus particulièrement, le caoutchouc adhère mécaniquement aux armatures 20, 21 de sorte qu'il ne peut pas être retiré de l'articulation 12 à 18 sans détruire le caoutchouc ou les armatures 20, 21. Les éléments élastiques 22, 23 sont montés entre les première et deuxième armatures 20, 21. Les éléments élastiques 22, 23 permettent le pivotement de la première armature 20 par rapport à la deuxième armature 21. Lorsque l'articulation 12 à 18 comporte un élément élastique 22, l'élément élastique 22 adhère aux deux armatures 20, 21, comme illustré aux figures 3 et 4. Ainsi, l'élément élastique 22 est solidement attaché aux deux armatures 20, 21, et du fait de ses propriétés élastiques, l'élément élastique 22 autorise un pivotement angulaire limité autour de l'axe longitudinal A des armatures 20, 21.

En variante, l'articulation 12 à 18 peut comprendre un ou plusieurs éléments intercalaires 25 et plusieurs éléments élastiques 22, 23. Les éléments intercalaires 25 sont des cylindres creux situés entre les première et deuxième armatures 20, 21. Les éléments élastiques 22, 23 sont situés de part et d'autre d'un élément intercalaire 25, auquel ils adhèrent solidement. Au moins un premier élément élastique 22 adhère en outre à la première armature 20 et un deuxième élément élastique 23 adhère en outre à la deuxième armature 21, comme illustré à la figure 2. Les intercalaires 25 favorisent le pivotement angulaire de la première armature 20 par rapport à la deuxième armature 21.

De manière à faciliter l'introduction de l'articulation 12 à 18 dans l'orifice 24 de la structure porteuse 4 à 7, le diamètre externe D1 de l'articulation 12 à 18 est variable. C'est-à-dire que le diamètre externe D1 de l'articulation 12 à 18 est apte à diminuer lorsque l'articulation 12 à 18 est introduite dans l'orifice 24 de la structure porteuse 4 à 7. Ainsi, lorsqu'on introduit l'articulation 12 à 18 dans l'orifice 24, la deuxième armature 21 appuie sur l'élément élastique 22, 23, qui se déforme pour diminuer le diamètre externe D1 de l'articulation 12 à 18. On peut donc introduire l'articulation 12 à 18 dans l'orifice 24, sans avoir à modifier un diamètre interne E de l'orifice 24. Puis, après introduction de l'articulation 12 à 18, l'élément élastique 22, 23 exerce une force de rappel qui appui la deuxième armature 21 contre une surface interne 29 de l'orifice 24 de la structure porteuse 4 à 7, ce qui permet de fixer solidement l'articulation 12 à 18 à la structure porteuse 4 à 7. Le diamètre externe D1 de l'articulation 12 à 18 correspond au diamètre externe de la deuxième armature 21. La deuxième armature 21 empêche l'articulation 12 à 18 de ressortir de l'orifice 24 lors de l'introduction de l'articulation 12 à 18 par poussées successives. De préférence, la deuxième articulation 21 est réalisée à partir d'un matériau qui n'est pas élastique, par exemple un métal, plus particulièrement un acier. Ainsi la deuxième armature 21 facilite l'introduction de l'articulation 12 à 18 dans l'orifice 24.

Préférentiellement, le diamètre externe D1 de l'articulation 12 à 18 est supérieur ou égal au diamètre interne E de l'orifice 24 de la structure porteuse 4 à 7, lorsque l'articulation 12 à 18 n'est pas introduite dans l'orifice 24. Ainsi, après introduction de l'articulation 12 à 18 dans l'orifice 24, les forces de rappel exercées par les éléments élastiques 22, 23 sur la deuxième armature 21 favorisent la fixation de l'articulation 12 à 18 sur la structure porteuse 4 à 7. On peut donc garantir une tenue mécanique suffisante de l'articulation 12 à 18 avec la structure porteuse 4 à 7, de sorte que l'articulation est montée fixe sur la structure porteuse 4 à 7.

Par exemple, la deuxième armature 21 comprend au moins deux parties 26, 27 séparées l'une de l'autre par un espace 28. Les deux parties 26, 27 sont situées en regard l'une de l'autre. De préférence, l'espace 28 s'étend le long de la deuxième armature 21. Ainsi, lorsque l'articulation 12 à 18 est située à l'extérieur de la structure porteuse 4 à 7, comme illustré sur la figure 3, le diamètre externe D1 a une valeur initiale non nulle, et une distance initiale non nulle D2 sépare les deux parties 26, 27 de la deuxième armature 21. L'espace 28 situé entre les deux parties 26, 27 permet un rapprochement des deux parties 26, 27 l'une vers l'autre. Lorsqu'on introduit l'articulation 12 à 18 dans l'orifice 24, les parties 26, 27 de la deuxième armature 21 se rapprochent l'une vers l'autre, la distance D2 les séparant diminue, et le diamètre externe D1 diminue également, comme illustré à la figure 4. Après introduction de l'articulation 12 à 18 dans l'orifice 24, le diamètre externe D1 coïncide avec le diamètre interne E de l'orifice 24. En d'autres termes, le diamètre externe D1 de l'articulation 12 à 18 a diminué.

Avantageusement, l'élément élastique 22, 23 peut pénétrer au sein de l'espace 28 séparant les deux parties 26, 27 de la deuxième armature 21.

Pour encore favoriser l'introduction de l'articulation 12 à 18 dans l'orifice 24, la première armature 20 peut comporter au moins deux parties 30, 31 séparées l'une de l'autre par un espace additionnel 32. Les deux parties 30, 31 de la première armature 20 sont situées en regard l'une de l'autre. De préférence l'espace additionnel 32 s'étend le long de la première armature 20. Une distance initiale non nulle D3 sépare les deux parties 30, 31 de la première armature 20. L'espace additionnel 32 permet à l'élément élastique 22 qui adhère à la première armature 20 d'y pénétrer lorsque l'articulation 12 à 18 est introduite dans l'orifice 24. Ainsi, l'espace additionnel 32 favorise la compression des éléments élastiques 22, 23 et facilite la diminution du diamètre externe D1 de l'articulation 12 à 18.

Selon le mode de réalisation illustré à la figure 2, on a représenté l'articulation 12 avant son introduction dans un orifice 24. Par exemple, le premier élément élastique 22 est placé de sorte qu'il pénètre dans l'espace additionnel 32. En outre, le deuxième élément élastique 23 pénètre dans l'espace 28 séparant les deux parties 26, 27 de la deuxième armature 21. La partie du deuxième élément élastique 23 pourra être comprimée lors de l'introduction de l'articulation 12 à 18 dans l'orifice 24, et permettra un rapprochement des deux parties 26, 27 de la deuxième armature 21 l'une vers l'autre, lors de l'introduction, tout en exerçant une force de rappel pour écarter les parties 26, 27 après l'introduction de l'articulation 12 à 18. La partie du premier élément élastique 22 pourra également être comprimée lors de l'introduction de l'articulation 12 à 18 dans l'orifice 24, et permettra un rapprochement des deux parties 30, 31 de la première armature 20 l'une vers l'autre, lors de l'introduction, tout en exerçant une force de rappel pour écarter les parties 30, 31 après l'introduction de l'articulation 12 à 18 et pour exercer une force de rappel sur la deuxième armature 21 pour la maintenir en appui contre la surface interne 29 de l'orifice 24.

Selon un mode de réalisation, illustré à la figure 2, les deux parties 26 et 27 de la deuxième armature 21 forment deux extrémités d'une même pièce, notée pièce externe. Les deux extrémités 26, 27 sont séparées par l'espace 28. En d'autres termes, la pièce externe présente une fente 28 s'étendant le long de l'axe longitudinal A de la pièce externe. La fente 28 correspond à l'espace 28 séparant les deux parties 26, 27 de la deuxième armature 21. La fente 28 peut être rectiligne. La fente 28 peut être parallèle à l'axe longitudinal A. Elle peut également s'étendre le long de l'axe longitudinal A, de façon oblique, en zigzag, ou de façon incurvée. Quelle que soit la forme de l'espace 28 séparant les deux parties 26, 27 de la deuxième armature 21, l'espace 28 permet un rapprochement des parties 26, 28 l'une vers l'autre. En outre, comme illustré sur la figure 2, les deux parties 30 et 31 de la première armature 20 peuvent également former deux extrémités d'une même pièce, notée pièce interne. Les deux extrémités 30, 31 sont séparées par l'espace additionnel 32. En d'autres termes, la pièce interne présente également une fente 32 s'étendant le long de l'axe longitudinal A de la pièce interne. La fente 32 correspond à l'espace additionnel 32 séparant les deux parties 30, 31 de la première armature 20. La fente 32 peut être rectiligne, parallèle à l'axe longitudinal A. Elle peut également s'étendre le long de l'axe longitudinal A, de façon oblique, en zigzag, ou de façon incurvée.

En variante, la deuxième armature 21 peut comprendre plusieurs pièces externes distinctes 26, 27 et 50, 51, comme illustré aux figures 3 et 4. Les pièces externes 26, 27 et 50, 51 sont situées en périphérie de l'articulation 12 à 18. Les pièces externes 26, 27 et 50, 51 sont fixées solidement à l'élément élastique 22 par adhérence. Les pièces externes 26, 27 et 50, 51 sont situées à distance les unes des autres de sorte qu'il existe un espace 28, 54, 55, 56 séparant deux pièces externes 26, 27 et 50, 51 voisines. Le nombre d'espaces 28, 54, 55, 56 favorisent la variation de diamètre externe D1 de l'articulation 12 à 18.

Selon encore une autre variante, la première armature 20 peut comprendre plusieurs pièces internes distinctes 30, 31. Sur la figure 3, on a représenté un exemple de réalisation dans lequel la deuxième armature 21 comprend quatre pièces externes 26, 27 et 50, 51, et la première armature 20 comporte deux pièces internes 30, 31. Les deux pièces internes 30, 31 sont séparées l'une de l'autre par deux espaces 32, 62. Les pièces internes 30, 31 sont fixées solidement à l'élément élastique 22 par adhérence.

Sur la figure 3, on a représenté l'articulation 12 introduite dans l'orifice 24 de la poutre principale 4. On peut noter que le diamètre externe D1 de l'articulation 1 coïncide avec le diamètre interne de l'orifice 24. On peut noter également qu'une partie de l'élément élastique 22 a pénétré au sein des espaces séparant les pièces externes 26, 27 et 50 à 51, et une autre partie de l'élément élastique 22 a pénétré au sein des espaces séparant les pièces internes 30, 31.

Sur la figure 5, on a représenté un exemple ou la première articulation 12 relie l'élément mobile principal 5 avec la poutre principale 4. L'élément mobile principal 5 a, par exemple, une section transversale en U et comporte deux flasques latérales 40, 41 formant un espace libre pour monter l'élément mobile principal 5 sur la poutre principale 4. La poutre principale 4 possède un orifice 24 ayant une surface interne 29 et un diamètre interne E. Par exemple, pour fixer la première armature 20 à l'élément mobile principal 5, on utilise une vis 42 vissée dans un écrou 43. La vis 42 traverse la cavité de la première armature 20 et serre les deux flasques 40, 41 contre les deux extrémités respectives de la première armature 20.

On fournit également un procédé de fabrication du dispositif d'appui et de guidage 1 défini ci-avant. Le procédé comporte un placement d'au moins un élément élastique 22, 23 entre une première et une deuxième armatures 20, 21 pour former une articulation 12 à 18 ayant un diamètre externe D1 variable. Puis, une introduction de l'articulation 12 à 18 dans un orifice 24 formé au sein d'une structure porteuse 4 à 7 du dispositif 1, en faisant diminuer le diamètre externe D1 de la deuxième armature 21. Puis une fixation de la première armature 20 à un support 5 à 11 portant un galet rotatif 3 destiné à être en contact avec le câble tracteur 2 de l'installation. La première armature 20 est apte à pivoter par rapport à la structure porteuse 4 à 7.

Grâce à l'invention qui vient d'être décrite, on fournit une articulation à pivotement adaptée à être introduite facilement dans un orifice d'une structure porteuse d'un dispositif d'appui et de guidage d'un câble tracteur de véhicule.

## Revendications

1. Installation de transport de véhicule, comprenant un câble tracteur (2) aérien pour tracter les véhicules et un dispositif (1) d'appui et de guidage du câble tracteur (2) aérien, le dispositif (1) comprenant une structure porteuse (4 à 7) dans laquelle un orifice (24) est formé, au moins un support (5 à 11) portant un galet rotatif (3) destiné à être en contact avec le câble tracteur (2) aérien, le galet (3) étant monté libre à rotation par l'intermédiaire d'une articulation à rotation et une articulation à pivotement (12 à 18) reliant ledit au moins un support (5 à 11) à la structure porteuse (4 à 7), l'articulation à pivotement (12 à 18) comportant une première armature (20) fixée au support (5 à 11), une deuxième armature (21) introduite dans l'orifice (24), et au moins un élément élastique (22, 23) placé entre les première et deuxième armatures (20, 21) et configuré pour permettre un pivotement de la première armature (20) par rapport à la structure porteuse (4 à 7), **caractérisé en ce que** l'articulation à pivotement (12 à 18) a un diamètre externe (D1) variable apte à diminuer lorsque l'articulation à pivotement (12 à 18) est introduite dans l'orifice (24).

2. Installation selon la revendication 1, dans laquelle le diamètre externe (D1) de l'articulation à pivotement (12 à 18) est supérieur ou égal à un diamètre interne (E) de l'orifice (24) avant une introduction de l'articulation à pivotement (12 à 18) dans l'orifice (24).

3. Installation selon la revendication 1 ou 2, dans laquelle la deuxième armature (21) comprend au moins deux parties (26, 27) séparées l'une de l'autre par un espace (28).

4. Installation selon la revendication 3, dans laquelle ledit au moins un élément élastique (22, 23) pénètre au sein de l'espace (28) séparant lesdites au moins deux parties (26, 27) de la deuxième armature (21).

5. Installation selon la revendication 3 ou 4, dans laquelle la première armature (20) comporte au moins deux parties (30, 31) séparées l'une de l'autre par un espace additionnel (32).

6. Installation selon la revendication 5, dans laquelle ledit au moins un élément élastique (22, 23) pénètre au sein de l'espace additionnel (32) séparant lesdites au moins deux parties (30, 31) de la première armature (20).

7. Installation selon l'une des revendications 3 à 6, dans laquelle lesdites au moins deux parties (26, 27) de la deuxième armature (21) forment deux extrémités d'une même pièce présentant une fente (28) s'étendant le long d'un axe longitudinal (A) de la pièce et correspondant à l'espace (28) séparant lesdites au moins deux parties (26, 27) de la deuxième armature (21).

8. Installation selon l'une des revendications 5 à 7, dans laquelle lesdites au moins deux parties (30, 31) de la première armature (20) forment deux extrémités d'une même pièce interne présentant une fente (32) s'étendant le long d'un axe longitudinal (A) de la pièce interne et correspondant à l'espace additionnel (32) séparant lesdites au moins deux parties (30, 31) de la première armature (20).

9. Installation selon l'une des revendications 1 à 8, dans laquelle ledit au moins un élément élastique (22, 23) comporte un matériau en caoutchouc.

10. Installation selon l'une des revendications 1 à 9, comprenant un élément intercalaire (25) situé entre les première et deuxième armatures (20, 21), et deux éléments élastiques (22, 23) placés de part et d'autre de l'élément intercalaire (25).

11. Procédé de fabrication d'un dispositif (1) d'appui et de guidage d'un câble tracteur (2) aérien de véhicule d'une installation de transport, **caractérisé en ce qu'**il comprend un placement d'au moins un élément élastique (22, 23) entre une première et une deuxième armatures (20, 21) pour former une articulation à pivotement (12 à 18) ayant un diamètre externe (D1) variable, le procédé comprenant une introduction de l'articulation à pivotement (12 à 18) dans un orifice (24) formé au sein d'une structure porteuse (4 à 7) du dispositif (1) en faisant diminuer le diamètre externe (D1) de l'articulation à pivotement (12 à 18), et une fixation de la première armature (20) à un support (5 à 11) portant un galet rotatif (3) destiné à être en contact avec le câble tracteur (2) aérien, la première armature (20) étant apte à pivoter par rapport à la structure porteuse (4 à 7).

## Patentansprüche

1. Transportanlage für Fahrzeuge, umfassend ein oberirdisches Zugseil (2) zum Ziehen der Fahrzeuge und eine Vorrichtung (1) zum Niederhalten und Führen eines oberirdischen Zugseils (2), wobei die Vorrichtung (1) umfasst: eine Tragstruktur (4 bis 7), in der eine Öffnung (24) ausgebildet ist, mindestens einen Träger (5 bis 11), der eine drehbare Rolle (3) trägt, die dazu bestimmt ist, mit dem oberirdischen Zugseil (2) in Kontakt zu sein, wobei die Rolle (3) über ein Drehgelenk und ein Schwenkgelenk (12 bis 18), das den mindestens eine Träger (5 bis 11) mit der Tragstruktur (4 bis 7) verbindet, frei drehbar montiert ist, wobei das Schwenkgelenk (12 bis 18) eine erste Armatur (20), die am Träger (5 bis 11) befestigt ist, eine zweite Armatur (21), die in die Öffnung (24) eingeführt ist, und mindestens ein elastisches Element (22, 23) umfasst, das zwischen der ersten und der zweiten Armatur (20, 21) angeordnet ist und dazu konfiguriert ist, ein Schwenken der ersten Armatur (20) in Bezug auf die Tragstruktur (4 bis 7) zu ermöglichen, **dadurch gekennzeichnet, dass** das Schwenkgelenk (12 bis 18) einen variablen Außendurchmesser (D1) hat, der in der Lage ist, sich zu verringern, wenn das Schwenkgelenk (12 bis 18) in die Öffnung (24) eingeführt wird.

2. Anlage nach Anspruch 1, wobei der Außendurchmesser (D1) des Schwenkgelenks (12 bis 18) vor einer Einführung des Schwenkgelenks (12 bis 18) in die Öffnung (24) größer oder gleich einem Innendurchmesser (E) der Öffnung (24) ist.

3. Anlage nach Anspruch 1 oder 2, wobei die zweite Armatur (21) mindestens zwei Teile (26, 27) umfasst, die durch einen Zwischenraum (28) voneinander getrennt sind.

4. Anlage nach Anspruch 3, wobei das mindestens eine elastische Element (22, 23) in den Zwischenraum (28) eindringt, der die mindestens zwei Teile (26, 27) der zweiten Armatur (21) voneinander trennt.

5. Anlage nach Anspruch 3 oder 4, wobei die erste Armatur (20) mindestens zwei Teile (30, 31) umfasst, die durch einen zusätzlichen Zwischenraum (32) voneinander getrennt sind.

6. Anlage nach Anspruch 5, wobei das mindestens eine elastische Element (22, 23) in den zusätzlichen Zwischenraum (32) eindringt, der die mindestens zwei Teile (30, 31) der ersten Armatur (20) voneinander trennt.

7. Anlage nach einem der Ansprüche 3 bis 6, wobei die mindestens zwei Teile (26, 27) der zweiten Armatur (21) zwei Enden eines selben Teils bilden, das einen Schlitz (28) aufweist, der sich entlang einer Längsachse (A) des Teils erstreckt und dem Zwischenraum (28) entspricht, der die mindestens zwei Teile (26, 27) der zweiten Armatur (21) voneinander trennt.

8. Anlage nach einem der Ansprüche 5 bis 7, wobei die mindestens zwei Teile (30, 31) der ersten Armatur (20) zwei Enden eines selben Innenteils bilden, das einen Schlitz (32) aufweist, der sich entlang einer Längsachse (A) des Innenteils erstreckt und dem zusätzlichen Zwischenraum (32) entspricht, der die mindestens zwei Teile (30, 31) der ersten Armatur (20) voneinander trennt.

9. Anlage nach einem der Ansprüche 1 bis 8, wobei das mindestens eine elastische Element (22, 23) ein Gummimaterial umfasst.

10. Anlage nach einem der Ansprüche 1 bis 9, umfassend ein Zwischenelement (25), das zwischen der ersten und dem zweiten Armatur (20, 21) liegt, und zwei elastische Elemente (22, 23), die beiderseits des Zwischenelements (25) angeordnet sind.

11. Verfahren zur Herstellung einer Vorrichtung (1) zum Niederhalten und Führen eines oberirdischen Zugseils (2) eines Fahrzeugs einer Transportanlage, **dadurch gekennzeichnet, dass** es ein Anordnen mindestens eines elastischen Elements (22, 23) zwischen einer ersten und einer zweiten Armatur (20, 21) umfasst, um ein Schwenkgelenk (12 bis 18) mit einem variablen Außendurchmesser (D1) zu bilden, wobei das Verfahren ein Einführen des Schwenkgelenks (12 bis 18) in eine Öffnung (24) umfasst, die in einer Tragstruktur (4 bis 7) der Vorrichtung (1) ausgebildet ist, indem der Außendurchmesser (D1) des Schwenkgelenks (12 bis 18) verringert wird, und ein Befestigen der ersten Armatur (20) an einem Träger (5 bis 11), der eine drehbare Rolle (3) trägt, die dazu bestimmt ist, mit dem oberirdischen Zugseil (2) in Kontakt zu sein, wobei die erste Armatur (20) in Bezug auf die Tragstruktur (4 bis 7) schwenkbar ist.

## Claims

1. Transport installation for vehicles comprising an aerial hauling cable (2) for hauling the vehicles and a device for supporting and guiding the aerial hauling cable (2) the device comprising a carrying structure (4 to 7) in which an orifice (24) is formed, at least one support (5 to 11) carrying a rotary roller (3) intended to be in contact with the aerial hauling cable (2), the roller (3) being freely rotatably mounted by means of a rotational articulation and a pivot articulation (12 to 18) connecting said at least one support (5 to 11) to the carrying structure (4 to 7), the pivot articulation (12 to 18) comprising a first frame (20) attached to the support (5 to 11), a second frame (21) introduced into the orifice (24) and at least one elastic element (22, 23) placed between the first and second frames (20, 21) and adapted to allow a pivoting movement of the first frame (20) relative to the carrying structure (4 to 7), **characterized in that** the pivot articulation (12 to 18) has a variable outer diameter (D1) able to decrease when the pivot articulation (12 to 18) is introduced into the orifice (24).

2. Installation according to claim 1, wherein the outer diameter (D1) of the pivot articulation (12 to 18) is greater than or equal to an inner diameter (E) of the orifice (24) prior to an introduction of the pivot articulation (12 to 18) into the orifice (24).

3. Installation according to claim 1 or 2, wherein the second frame (21) comprises at least two parts (26, 27) separated from each other by a gap (28).

4. Installation according to claim 3, wherein said at least one elastic element (22, 23) enters within the gap (28) separating said at least two parts (26, 27) of the second frame (21) .

5. Installation according to claim 3 or 4, wherein the first frame (20) comprises at least two parts (30, 31) separated from each other by an additional gap (32).

6. Installation according to claim 5, wherein said at least one elastic element (22, 23) enters within the additional gap (32) separating said at least two parts (30, 31) of the first frame (20).

7. Installation according to any one of the claims 3 to 6, wherein said at least two parts (26, 27) of the second frame (21) form two ends of a same piece presenting a slot (28) extending along a longitudinal axis (A) of the piece and corresponding to the gap (28) separating said at least two parts (26, 27) of the second frame (21).

8. Installation according to any one of claims 5 to 7, wherein said at least two parts (30, 31) of the first frame (20) form two ends of a same internal piece presenting a slot (32) extending along a longitudinal axis (A) of the internal piece and corresponding to the additional gap (32) separating said at least two parts (30,31) of the first frame (20).

9. Installation according to any one of claims 1 to 8, wherein said at least one elastic element (22, 23) comprises a rubber material.

10. Installation according to any one of claims 1 to 9, comprising an intermediate element (25) located between the first and second frames (20, 21), and two elastic elements (22, 23) placed on either side of the intermediate element (25) .

11. Method of manufacturing a device (1) for supporting and guiding an aerial hauling cable (2) for vehicles of a transport installation, **characterized in that** it comprises placing at least one elastic element (22, 23) between a first and a second frame (20, 21) so as to form a pivot articulation (12 to 18) having a variable outer diameter (D1), the method comprising introducing the pivot articulation (12 to 18) into the orifice (24) formed within a carrying structure (4 to 7) of the device (1) by decreasing the outer diameter (D1) of the pivot articulation (12 to 18), and fixing the first frame (20) to the support (5 to 11) carrying a rotary roller (3) intended to be in contact with the vehicle hauling cable (2), the first frame (20) being able to pivot relative to the carrying structure (4 to 7).
